# EUROPEAN PATENT APPLICATION

(11) **EP 1 974 853 A1**
(43) Date of publication of application: **01.10.2008**
(21) Application number: 07425190.1
(22) Date of filing: 30.03.2007
(51) Int. Cl.: B23Q 39/02

(54) **Apparatus for machining workpieces**

(71) Applicant: ME.C.AL. S.p.A., 27030 Frascarolo (PV) (IT)
(72) Inventor: Cavezzale, Ennio, 27030 Frascarolo (PV) (IT)
(74) Representative: Perani, Aurelio

(57) **Abstract**

An apparatus (1) for machining workpieces (2) comprises a first tool-holder table (10) rotating about an axis of rotation (A-A) and at least one second tool-holder table (20) rotating about an axis of rotation (B-B) parallel to the axis of rotation (A-A) of the first tool-holder table (10). Each tool-holder table (10, 20) is mounted rotatably on a support element (11, 21) and comprises a plurality of chucks having an axis of rotation perpendicular to the axis of rotation of the table. The support element (11, 21) is supported movably by a stationary support structure (13, 23) so as to move in a first direction (Y-Y) perpendicular to the axis of rotation of the tables (A-A) and in at least one second direction (X-X, Z-Z) perpendicular to the first direction (Y-Y). The stationary support structures (13, 23) of the first table (10) and the second table (20) are positioned on opposite sides of the workpiece (2).

## Description

The present invention relates to an apparatus for machining workpieces in accordance with the preamble of Claim 1.

In particular, the present invention is applicable to the machining of workpieces such as profiled parts made of metal or plastic and also wood with widely varying cross-sections, transverse to their longitudinal axis, from tubular cross-sections with parallel sides to open cross-sections with sides at an angle relative to each other.

In accordance with the known art, these parts are deposited on a loading bench provided with means for gripping and retaining the parts in the machining position and with means for moving them from a loading position into an unloading position, passing through one or more stations where apparatus for machining the parts are provided.

The machining operations may be of various types such as, for example, boring operations performed in predetermined points of the part or operations involving milling, cutting or mounting of accessories and so on.

In accordance with a first example of the known art, the apparatus for machining workpieces comprises a chuck or electric chuck equipped with a machining tool and mounted on a slide sliding on a circular support which surrounds the workpiece. The chuck is brought into the various machining positions by means of operation of the slide which, sliding on the rotating support, allows machining to be performed on all the faces of the workpiece. This apparatus, although allowing interpolated machining operations to be performed, is extremely complex from the point of view of its constructional design and management of the machining operations.

A second example of a machining apparatus known according to the state of the art comprises a plurality of chucks which are mounted on slides sliding on mutually perpendicular supports so as to form a self-enclosed structure. Since each chuck, by means of its own slide, is able to move along only one side of the self-enclosed structure, this operation does not allow interpolated machining operations to be performed.

A third example of a machining apparatus known according to the state of the art comprises two L-shaped support elements, each of which carries a chuck on each of the two sides of the L and a chuck at the corner of the L. This structure allows interpolated machining operations to be performed, but only with fixed angles.

The apparatus described above with reference to the known art therefore has notable drawbacks since they do not allow all the operations necessary for machining a part, such as a section for door or window frames and the like, to be performed easily and rapidly. Moreover, the apparatus described above are structurally complex and not very versatile.

The above shows that there exists the need to provide an apparatus which allows any type of machining operation to be performed on workpieces easily and more rapidly.

The object of the present invention is therefore that of proposing an apparatus for machining workpieces, which has characteristics such as to satisfy the abovementioned requirement and overcome at the same time the drawbacks encountered in connection with the known art.

This object is achieved by an apparatus for machining workpieces in accordance with Claim 1.

The use of at least two rotating tool-holder tables mounted on opposite sides of the workpiece and each movable in at least two directions results in an apparatus which is extremely versatile and able to perform any type of machining operation rapidly.

Further characteristic features and advantages of the apparatus for machining workpieces according to the present invention will emerge from the description below of a preferred example of embodiment provided by way of a non-limiting illustration, with reference to the accompanying figures in which:
- Figure 1 shows a top plan view of an apparatus for machining workpieces in accordance with a first embodiment of the present invention;
- Figure 2 shows a front plan view of the apparatus for machining workpieces according to Figure 1;
- Figure 3 shows a side plan view of the apparatus for machining workpieces according to Figure 1;
- Figure 4 shows a top plan view of an apparatus for machining workpieces in accordance with a second embodiment of the present invention;
- Figure 5 shows a side plan view of the apparatus for machining workpieces according to Figure 4;
- Figure 6 shows a top plan view of an apparatus for machining workpieces in accordance with a third embodiment of the present invention;
- Figure 7 shows a side plan view of the apparatus for machining workpieces according to Figure 6;
- Figure 8 shows a front plan view of the tool-holder tables of the apparatus according to the present invention by a workpiece;
- Figure 9 shows a front plan view of the tool-holder tables according to Figure 8 in a different operative configuration.

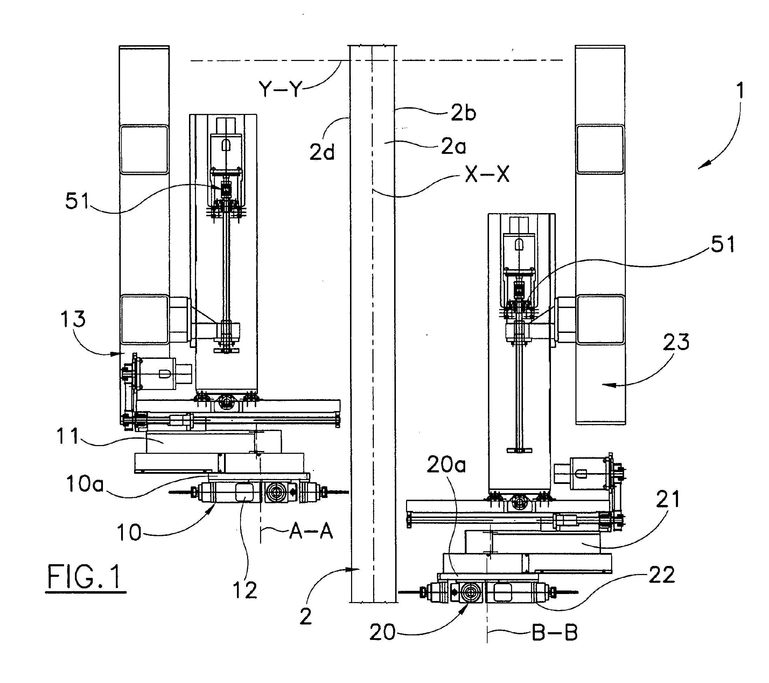

With reference to the accompanying figures 1 denotes overall an apparatus for machining a workpiece 2 in accordance with the present invention.

The apparatus 1 may be used for machining metal, plastic or also wood sections 2 where it is required to perform various operations, such as, for example, boring, milling, cutting and welding, on sections 2 which are situated on a conventional work bench (not shown in the figures).

In the example shown in the accompanying figures, the sections 2 are fed in the direction indicated by X-X.

The apparatus 1 comprises a first tool-holder table 10 rotating about an axis of rotation indicated by A-A in the figures and at least one second tool-holder table rotating about an axis of rotation B-B parallel to the axis of rotation A-A of the first tool-holder table 10.

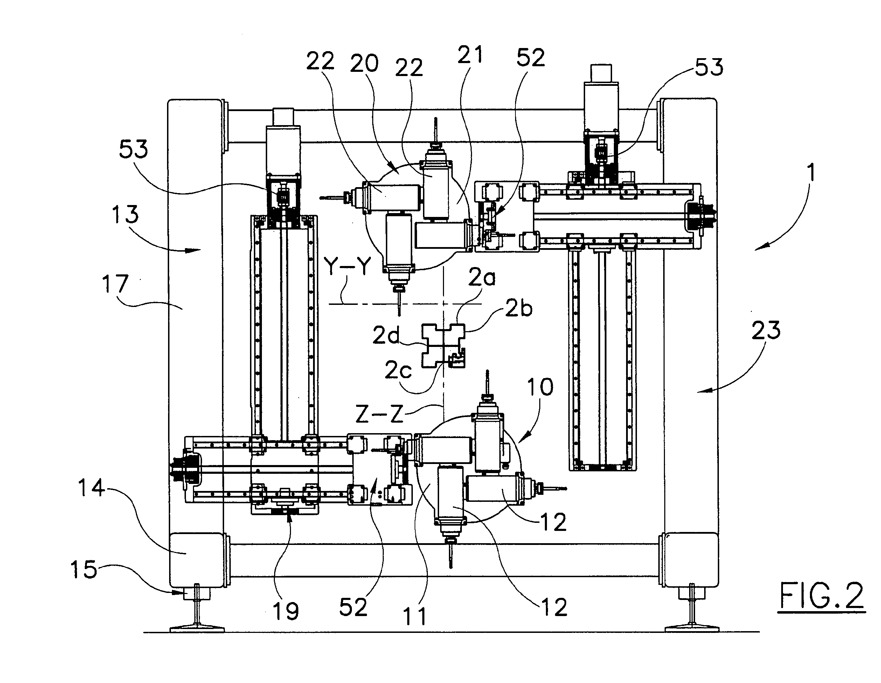

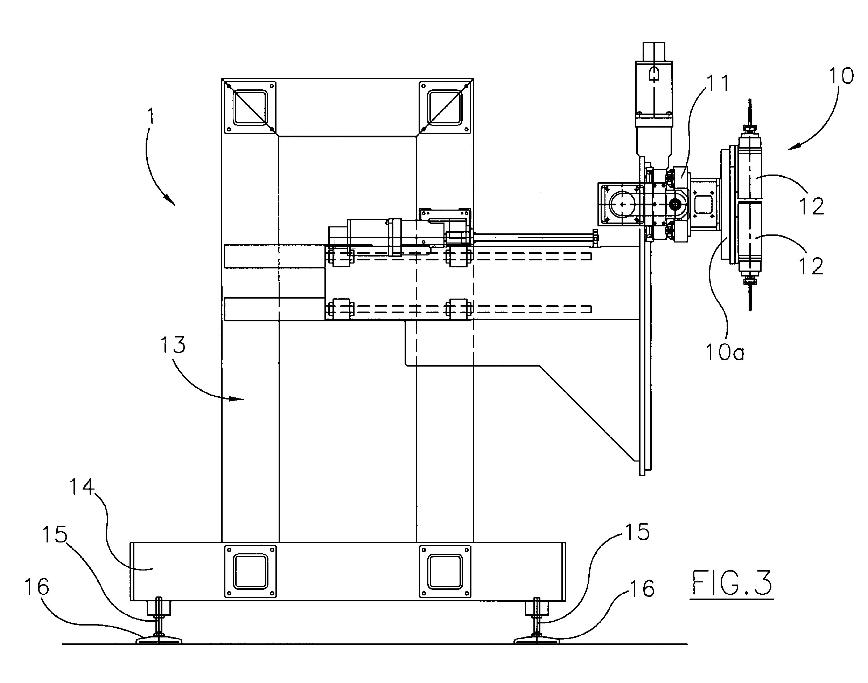

In accordance with the embodiment shown in Figures 1 to 3, the apparatus 1 comprises two tool-holder tables, namely the first tool-holder table 10 and the second tool-holder table 20. According to a different embodiment described in greater detail in the remainder of the present description, the apparatus 1 may comprise two or even several pairs of tool-holder tables.

Each tool-holder table 10, 20 is mounted rotatably on a support element 11, 21 and comprises a plurality of chucks, in the example four in number and denoted overall by 12 for the table 10 and by 22 for the table 20, having axes of rotation perpendicular to the axis of rotation A-A or B-B of the tables 10 and 20.

It should be pointed out that the tool-holder tables may also be equipped with non-rotating tools.

In particular, each tool-holder table, for example the table 10, comprises a tool-holder disk 10a mounted rotatably on the support element 11 and a plurality of chucks 12 mounted in fixed positions on the tool-holder disk 10a.

In the same way, the table 20 comprises a tool-holder disk 20a mounted rotatably on the support element 21 and a plurality of chucks 22 mounted in fixed positions on the tool-holder disk 20a.

In the examples shown in the accompanying figures, the chucks of the tool-holder tables are arranged on the tool-holder disk with the axes of rotation of the rotating tool perpendicular to each other on two adjacent chucks. Alternatively, it is possible to envisage different configurations of the chucks on the tool-holder disk, such as, for example, a star configuration.

Advantageously, the chucks are electric chucks equipped with an electric motor for rotationally operating the respective tools. The electric power supply to the electric chucks of the tool-holder tables 10, 20 is provided via electric cables which are housed inside protective sheaths which can be wound so as to allow rotation of the tool-holder tables.

The support elements 11, 21 of the tables 10, 20 are movably supported by respective stationary support structures 13, 23 so as to move in a first direction Y-Y perpendicular to the axis of rotation of the tables A-A and in at least one second direction, in the example shown in the figures the direction X-X, perpendicular to the first direction Y-Y.

In particular, the support elements 11, 21 are movable, with respect to the associated stationary support structures, in the first direction Y-Y so as to move the respective tool-holder table 10, 20 between a working position, by the workpiece 2, and a rest position, situated distant from the workpiece 2.

In accordance with the invention, the stationary support structures 13, 23 of the first table 10 and the second table 20 are positioned on opposite sides of the workpiece 2 by the workpiece 2 itself.

The presence of at least two rotating tool-holder tables, each movable in at least two mutually perpendicular directions and supported by stationary support structures positioned on opposite sides of the workpiece, allows any type of machining operation, i.e. both fixed and interpolated, to be performed, acting, also simultaneously, on two separate points of the workpiece 2.

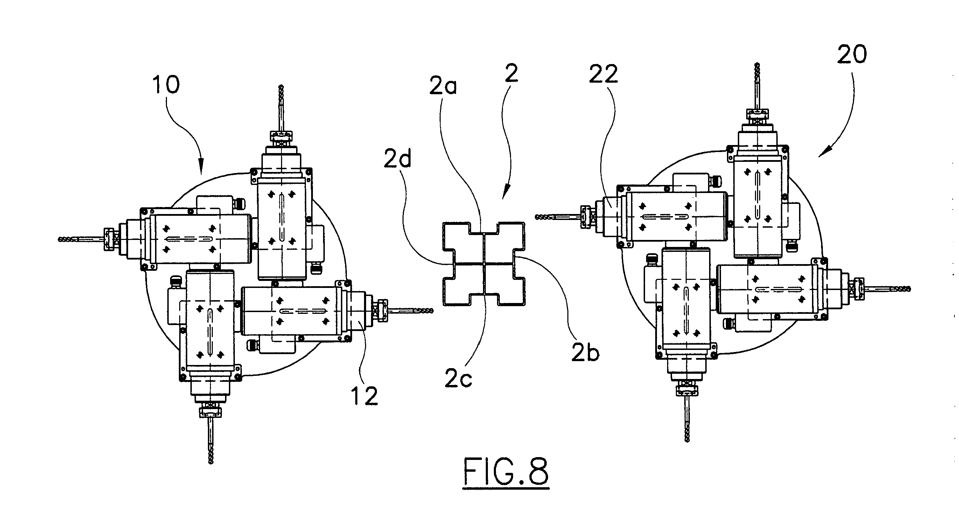

As shown in Figure 8, each of the two tool-holder tables 10 and 20 may perform machining operations on at least two sides of the workpiece 2. In the case in question, the table 10 is able to perform machining operations on the sides 2c and 2d, while the table 20 is able to perform machining operations on the sides 2a and 2b (Figure 8).

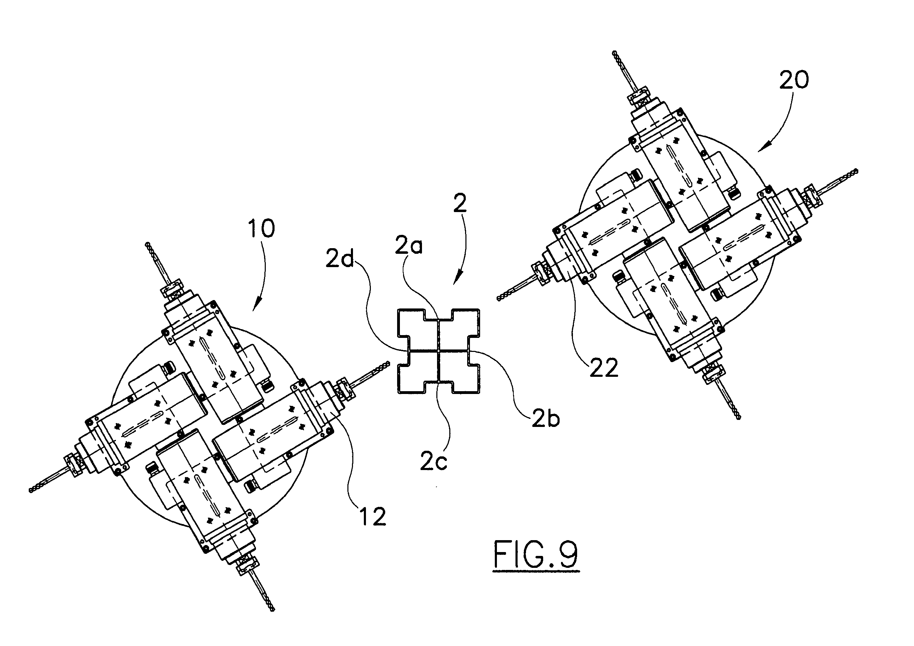

Moreover, owing to rotation of the tool-holder tables 10 and 20 about the axes of rotation A-A and B-B respectively, it is possible to perform interpolated machining operations on the sides 2c, 2d and 2a, 2b, respectively (Figure 9).

In accordance with one embodiment, at least one of the support elements 11, 21 is movable in the second direction X-X and in a third direction, indicated by Z-Z, perpendicular to the first direction Y-Y and to the second direction X-X.

Alternatively, the support elements 11, 21 are both movable in the second direction X-X and in the third direction Z-Z. In this way, both the support elements 11, 21 and therefore both the tool-holder tables 10, 20 supported by them may be moved in the three directions X-X, Y-Y and Z-Z such that the individual tool-holder table is able to perform machining operations on several sides or on several surfaces of the workpiece 2, thus increasing the versatility of the apparatus 1.

For example, in the case of a section 2 to be machined, the individual tool-holder table 10 movable in the three mutually perpendicular directions X-X, Y-Y and Z-Z allows machining to be performed on the three sides 2a, 2b, 2c of the section 2. In this case the two upper and lower sides 2a, 2c of the section 2 may be machined alternately by both the two tool-holder tables 10, 20, while the other two sides 2b, 2d may be machined only by a single tool-holder table.

Advantageously the stationary support structures 12, 22 of the first table 10 and the second table 20 are positioned on opposite sides of a longitudinal axis parallel to the axis of rotation of the tables A-A, indicated in the figures by X-X and corresponding to the second direction of movement of the support elements 11, 21 of the tables 10, 20.

In accordance with the embodiment shown in the accompanying figures, each stationary support structure, for example the support structure 13, comprises a base 14 supported by two columns 15 provided with respective support feet 16.

The base 14 has, mounted thereon, a support frame 17 for supporting a movement mechanism 19 able to move the support element 11 of the tool-holder table 10 in the three directions X-X, Y-Y and Z-Z defined above. For this purpose, the movement mechanism comprises actuating means, for example electric motors, acting on the support element 11 so as to move the support element 11 in the three directions X-X, Y-Y and Z-Z.

The actuating means comprise, for example, three electric motors each able to move the support element 11 in one of the three directions X-X, Y-Y and Z-Z.

In the example shown in the accompanying figures, the actuating means comprise a first electric motor 51 for moving the support element 11 in the direction X-X, a second electric motor 52 for moving the support element 11 in the direction Y-Y and a third electric motor 53 for moving the support element 11 in the direction Z-Z.

In accordance with the embodiment shown in the figures, the movement in the directions X-X and Y-Y allows the support element 11 to be moved in horizontal directions, while the movement in the direction Z-Z allows the support element to be moved 11 vertically.

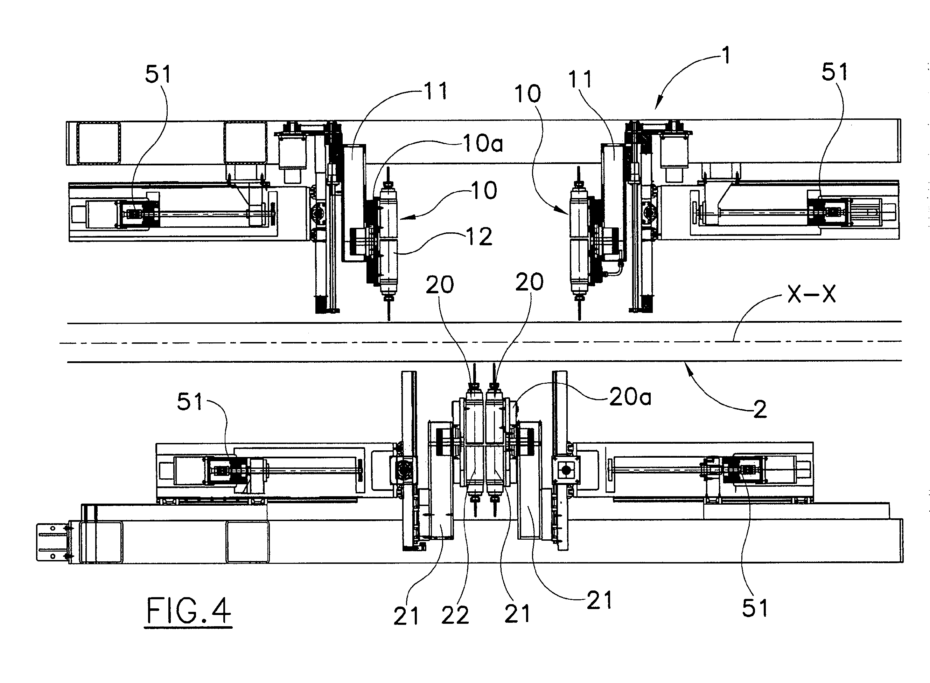

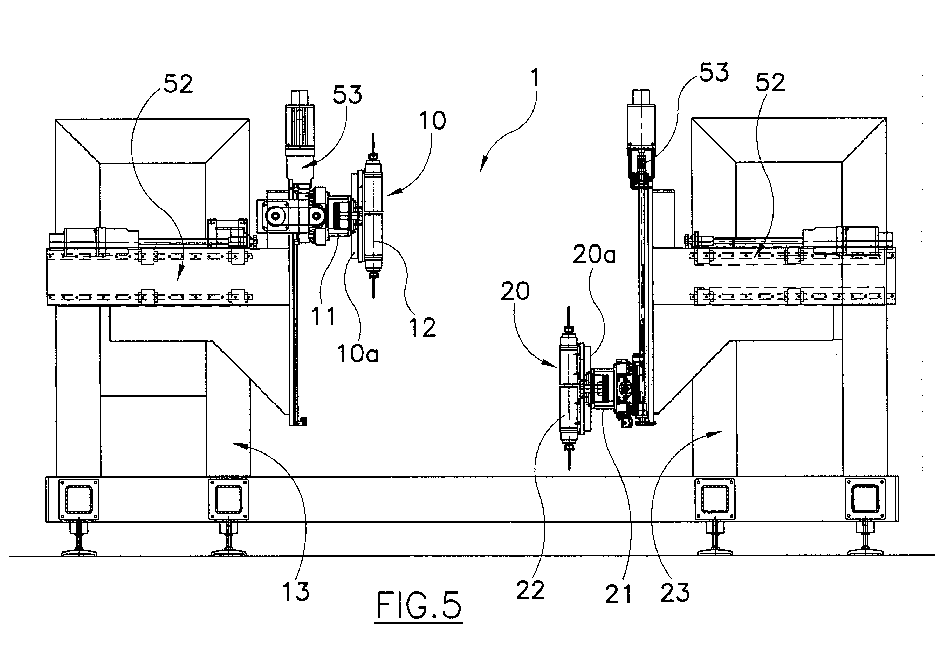

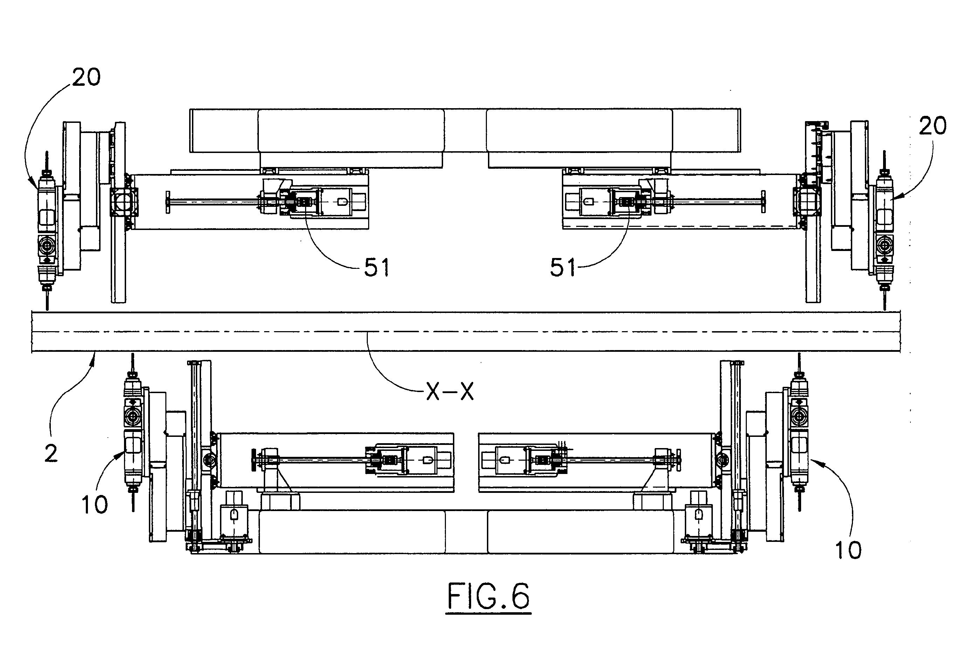

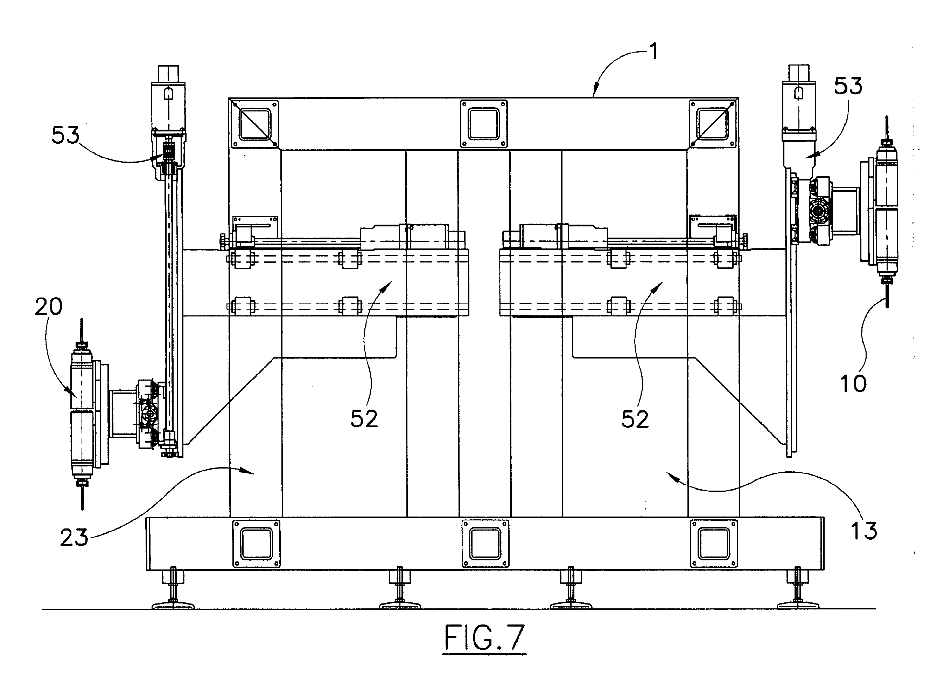

In accordance with the embodiment shown in Figures 4 to 7, the apparatus 1 comprises two pairs of tool-holder tables 10, 20, each pair of tool-holder tables being arranged as described above. The two pairs are in particular positioned adjacent to each other in the direction of feeding X-X of the workpiece 2. This allows a greater number of machining operations to be performed simultaneously on several points of the workpiece, arranged in the direction X-X.

As can be appreciated from that described above, with the apparatus for machining workpieces according to the invention it is possible to overcome the drawbacks mentioned in connection with the known art.

In the case in question, the apparatus for machining workpieces according to the present invention allows a greater workpiece machining speed and a greater flexibility and versatility of the workstation in which this apparatus is used.

Obviously, a person skilled in the art, in order to satisfy special and specific requirements, may make numerous modification and variations to the apparatus for machining workpieces according to the invention described above, all of which, however, remain within the scope of protection of the invention as defined by the following claims.

## Claims

1. Apparatus (1) for machining workpieces (2), said apparatus (1) comprising a first tool-holder table (10) rotating about an axis of rotation (A-A),
**characterized in that** it comprises:
at least one second tool-holder table (20) rotating about an axis of rotation (B-B) parallel to the axis of rotation (A-A) of the first tool-holder table (10),
each tool-holder table (10, 20) being mounted rotatably on a support element (11,21) and comprising a plurality of chucks (12) having an axis of rotation perpendicular to the axis of rotation of the table, the support element (11, 21) being supported movably by a stationary support structure (13, 23) so as to move in a first direction (Y-Y) perpendicular to the axis of rotation of the tables (A-A) and in at least one second direction (X-X, Z-Z) perpendicular to said first direction (Y-Y),
the stationary support structures (13, 23) of the first table (10) and the second table (20) being positioned on opposite sides of the workpiece (2) by the workpiece (2).

2. Apparatus (1) according to Claim 1, in which at least one support element (11, 21) is movable in a third direction (Z-Z) perpendicular to said first direction (Y-Y) and to said second direction (X-X).

3. Apparatus (1) according to Claim 2, in which all the support elements (11, 21) are movable in said second direction (X-X) and in said third direction (Z-Z).

4. Apparatus (1) according to any one of Claims 1 to 3, in which the stationary support structures (13, 23) of the first table (10) and the second table (20) are positioned on opposite sides of a longitudinal axis (X-X) parallel,to the axis of rotation of the tables (A-A).

5. Apparatus (1) according to any one of Claims 1 to 4, in which said second direction corresponds to the direction of said longitudinal axis (X-X).

6. Apparatus (1) according to any one of Claims 1 to 5, in which each support element (11, 21) is movable in said first direction (Y-Y) so as to move the tool-holder table (10, 20) between a working position, by the workpiece (2), and a rest position, situated distant from the workpiece (2).

7. Apparatus (1) according to any one of Claims 1 to 6, in which each tool-holder table (10, 20) comprises a tool-holder disk (10a, 20a) mounted rotatably on the movable support element (11, 21) and a plurality of chucks (12) mounted in fixed positions on the tool-holder disk (10a, 20a), each chuck carrying a rotating tool with an axis of rotation perpendicular to the axis of rotation of the table (A-A, B-B).

8. Apparatus (1) according to Claim 7, in which said plurality of chucks (12) comprises four chucks arranged on the tool-holder disk with axes of rotation of the tool perpendicular to each other on two adjacent chucks.
